# EUROPEAN PATENT SPECIFICATION

(11) **EP 2 025 554 B1**
(45) Date of publication and mention of the grant of the patent: **07.11.2012**
(21) Application number: 08013787.0
(22) Date of filing: 31.07.2008
(51) Int. Cl.: B60N 2/427

(54) **Safety ensuring device**
Sicherheitsvorrichtung
Dispositif de garantie de la sécurité

(30) Priority: 14.08.2007 JP 2007211202
(43) Date of publication of application: 18.02.2009
(73) Proprietor: Daicel Chemical Industries, Ltd., Kita-ku, Osaka-shi Osaka 530-0001 (JP)
(72) Inventor: Katsuda, Nobuyuki, Tatsuno-shi Hyogo (JP)
(74) Representative: Grünecker, Kinkeldey, Stockmair & Schwanhäusser

(56) References cited:
- WO-A-2004/007237
- WO-A-2006/076898
- GB-A- 1 322 280
- US-A- 5 125 472

## Description

The present invention relates to a safety ensuring device according to the preamble of independent claim 1. Such a device can be taken from the prior art document WO 2006/076898 A. A related device is also known from WO 2004/007237 A1.

When an impact is generated when a vehicle runs, the vehicle occupant with a certain seating posture (when the occupant sits at the front end of the seat or when the back rest is tilted rearward) may slip forward under the seatbelt and the restraint with the seatbelt may be canceled or reduced, thereby decreasing the effectiveness of occupant protection. This phenomenon is typically called "submarine phenomenon".

JP-A No. 2000-272446 discloses a technique for preventing the submarine phenomenon by using a gas generator as a power source.

In order to improve the safety ensuring device as known from the prior art, the present invention provides safety ensuring device according to claim 1.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
Fig. 1 shows a perspective view of a seat provided with a safety ensuring device;
Fig. 2(a) shows a cross sectional view illustrating the safety ensuring device prior to actuation, Fig. 2 (b) shows a cross sectional view illustrating the safety ensuring device after the actuation;
Fig. 3(a) shows a cross sectional view illustrating the safety ensuring device of an embodiment of the present invention prior to actuation, Fig. 3 (b) shows a cross sectional view illustrating the safety ensuring device of an embodiment of the present invention after the actuation; and
Fig. 4 shows a perspective view of the movable portion 140 shown in Fig. 3.

### DETAILED DESCRIPTION OF INVENTION

Because the device of JP-A No. 2000-272446 uses a gas generator as a power source, it excels in swiftness, but the device can be used only once and cannot be reused. Therefore, where the device is actuated when the submarine phenomenon occurs as a result of an abrupt deceleration without collision, the device cannot be actuated at a time of collision thereafter. Further, where the device is so designed as to be actuated only at collision and not be actuated at rapid deceleration without collision, it cannot be considered sufficient in terms of occupant protection.

The present device provides a safety ensuring device that can be actuated rapidly and, in principle, repeatedly so as to inhibit the submarine phenomenon.

In the safety ensuring device, prior to collision or when an abrupt deceleration occurs, the entire seat portion of the seat or part thereof is moved up and down by the electric drive device, whereby the occupant restraining performance of the seatbelt is prevented from degrading and occupant protection performance is maintained. The expression "the entire seat portion of the seat is moved up and down" means that the entire seat portion is tilted so that the front side thereof rises and the rear side thereof lowers and the expression "the seat portion is partially moved up and down" means that part of the seat portion (preferably part on the front side from the central portion in the longitudinal direction of the seat portion) is caused to protrude upward, or that part of the seat portion (preferably part on the rear side from the central portion in the longitudinal direction of the seat portion) is concaved downward, or a combination of the two.

Examples of a suitable electric drive device employed in accordance with the present invention include one using a motor and a combination of one or two or more gears or cams, one using a solenoid, and one using a motor and a lever, a belt, a chain, or the like.

Because the safety ensuring device in accordance with the present invention uses electricity as a power source, it can, in principle, be actuated any number of times (that is, with the exception of cases in which the vehicle itself cannot be used due to collision), by contrast with the devices using a gas generator as a power source as in the device described in JP-A No. 2000-272446.

On the other hand, because the safety ensuring device in accordance with the present invention uses electricity as a power source, it lacks swiftness of the device comparing to that using a gas generator as the power source. However, this problem can be resolved by combining a pre-crash sensor (approach sensor) with a control unit.

In other words, in the device of JP-A No. 2000-272446, the device is actuated after the vehicle collides, but in the device of the invention of the present application, the abnormal approach of an obstacle such as another vehicle, building, block walls, and electric poles is detected by a pre-crash sensor, and the device is actuated, before the vehicle collides, by a command from a control unit that has received the information. Thus, swiftness is improved, whereby the occupant protection performance is improved.

Further, in accordance with the present device, a sensor other than the pre-crash sensor is also combined, whereby the submarine phenomenon can be inhibited in response to an abrupt deceleration without collision caused by the driver performing harsh braking. In this aspect the present device is also superior to that of the device described in JP-A No. 2000-272446. The other sensor is a sensor detecting the abnormal run of the vehicle, and the examples of suitable sensors include a sensor that detects a variation in velocity caused by an abrupt deceleration, a sensor that detects the variation of occupant's posture in the vehicle caused by abrupt change in direction, and sensors similar thereto.

A present device relates to the safety ensuring device, wherein the movable portion is provided at the front end portion of the seat portion of the vehicle seat and causes the front end portion side to protrude upward when an impact caused by a collision or an abrupt deceleration is applied to the occupant wearing the seatbelt.

Because the front end portion of the seat portion is caused to protrude upward, the submarine phenomenon is inhibited and the occupant is prevented from slipping under the seatbelt.

The invention preferably relates to the safety ensuring device, wherein the movable portion is provided at the rear end portion of the seat portion of the vehicle seat and concaves the rear end portion side downward when an impact caused by a collision or an abrupt deceleration is applied to the occupant wearing the seatbelt.

Because the rear end portion side is concaved downward, the submarine phenomenon is inhibited and the occupant is prevented from slipping under the seatbelt.

The device preferably relates to the safety ensuring device, which includes, as the sensor, an acceleration sensor or a deceleration sensor for sensing an abrupt deceleration when harsh braking is performed during running of the vehicle, in addition to the pre-crash sensor for sensing that the vehicle rapidly approaches a collision object during running of the vehicle.

By combining with various sensors, it is possible to inhibit the submarine phenomenon that is caused by factors other than collision and increase the occupant protection ability.

Because the safety ensuring device in accordance with the present invention is driven by an electric device, it can, in principle, be used repeatedly. Preferred Embodiment of the Invention

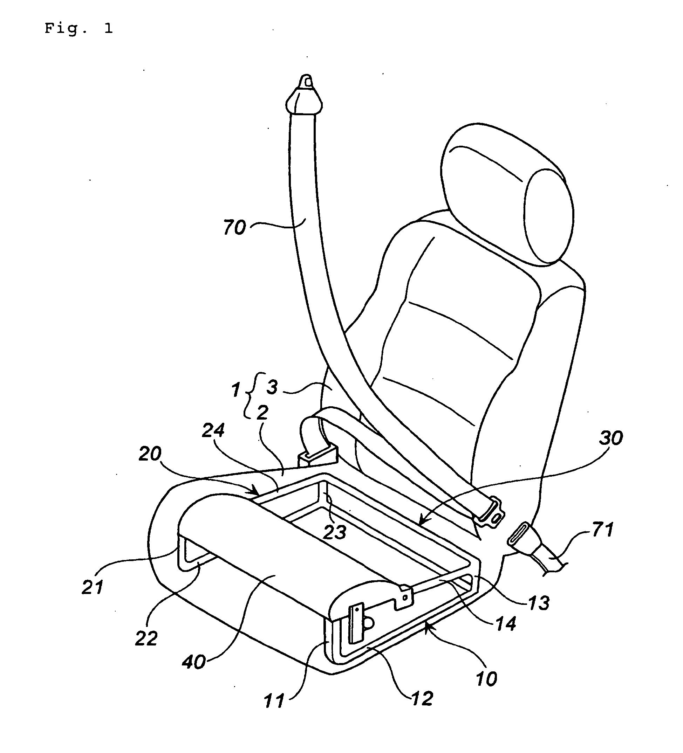

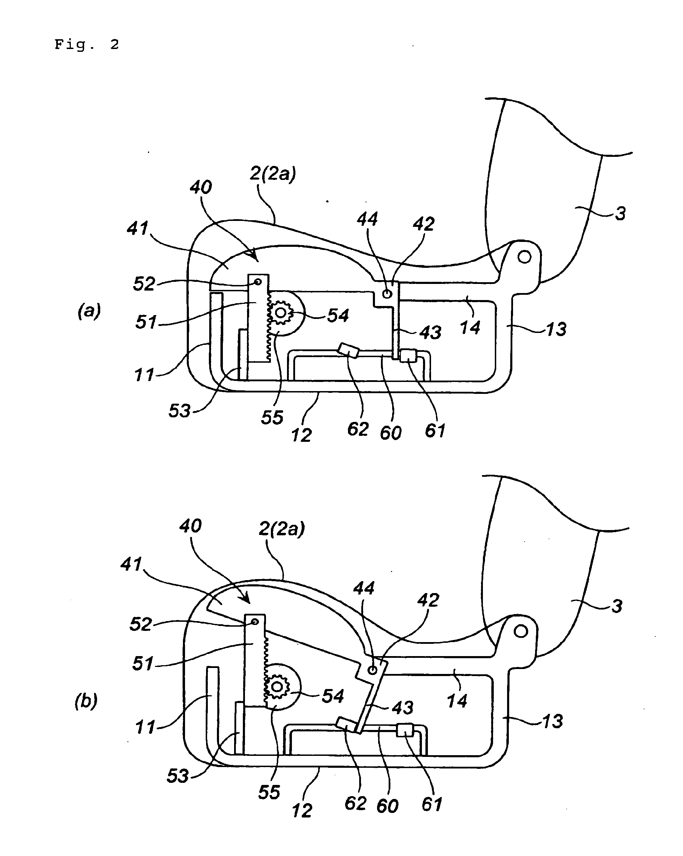

### (1) Safety ensuring device shown in Fig. 1, Fig. 2

Fig. 1 is a perspective view of a seat provided with a safety ensuring device of one embodiment, this drawing showing the inside of a seat portion from which a surface material (cushion material or cover) has been removed (the inner structure is partially omitted). Fig. 2(a) is a partial sectional view (prior to actuation) in the longitudinal direction of Fig. 1. Fig. 2(b) illustrates the state of the configuration shown in Fig. 2(a) after actuation.

A seat 1 has a seat portion 2 and a back portion 3, and the safety ensuring device is disposed in the seat portion 2.

Two frames 10, 20 located on side surfaces and one frame 30 located on the rear side are disposed inside the seat portion 2, and each frame is formed by four frame members.

The frame 10 has four frame members 11 to 14, and the opposing frame 20 has four frame members 21 to 24. The frame member 13 and frame member 23 are also used as the frame members of the rear frame 30.

A movable portion 40 has a main portion 41 located in a position facing the seating surface of the occupant, an attachment portion 42 formed on one end side of the main portion 41, and a rod-shaped ON/OFF means 43 extending downward from the attachment portion 42. The movable portion 40 is rotatably attached to a distal end portion of the frame member 14 with a pin 44 in the attachment portion 42. Both end sides of the main portion 41 are supported so that they abut against upper end portions of the frame members 11, 21, respectively. The opposite side of the movable portion 40 in the transverse direction (transverse direction of the seat portion 2) has a similar attachment structure (not shown in Fig. 2) and is rotatably attached to a distal end portion of the frame member 24.

The drive portion has a rack 51 and a pinion 54 disposed so as to engage with the teeth of the rack 51. The rack 51 is fixed with a bolt 52 to the main portion 41 of the movable portion 40 and is supported by a retainer 53 so as to be pushed toward the pinion 54. The pinion 54 is connected to an electric motor 55. The electric motor 55 is connected to a power source (vehicle battery) and a control unit (not shown in the drawings).

Further, although not shown in Fig. 2, a similar rack-and-pinion set (the drive portion has two rack-and-pinion sets) is also attached to the opposite side in the transverse direction of the seat portion 2. Only one rack-and-pinion set can be also used as the drive portion. In this case, the rack-and-pinion set is preferably disposed in the central portion in the transverse direction of the main portion 41 of the movable portion 40.

The drive portion may also use separate electric motors disposed on the side shown in Fig. 2 and on the opposite side in the transverse direction, and various other gears (for example, a worm gear in which a worm and a worm wheel meshing therewith are assembled) may be assembled other than the rack and pinion.

A switch frame 60 is attached to the frame member 12, and an ON switch 61 and an OFF switch 62 are attached to the switch frame 60. As shown in Fig. 2(a), prior to actuation, a distal end of the ON/OFF means 43 of the movable portion 40 is in contact with the ON switch 61. In addition to the side shown in Fig. 2, a switch may be also provided on the opposite side, but a switch on one side will suffice.

The operation of the safety ensuring device that is installed on a vehicle will be explained below with reference to Fig. 1, Fig. 2. The vehicle has a pre-crash sensor (approach sensor) and an acceleration sensor and also has a control unit.

When the vehicle runs and comes too close to an obstacle such as another vehicle, a signal from the pre-crash sensor that has detected such an event is transmitted to the control unit. In the control unit, the signal is processed and the safety ensuring device is actuated at a stage prior to collision with the obstacle when the necessity of such an actuation is established.

As shown in Fig. 1, Fig. 2(a), prior to actuation, the distal end of the main member 41 abuts against the upper end portions of the frame member 11 and frame member 21, and the ON/OFF means 43 is in contact with the ON switch 61.

Further, as shown in Fig. 2(b), where an actuation current is received from the control unit and the electric motor 55 is actuated and rotated, the pinion 54 is rotated and the rack 51 receives the rotation of the pinion 54 and moves upward. The main portion 41 is pushed up, while rotating about the pin 44 as a center. In this case, because the cover 2a that covers the seat portion 2 has good stretching ability, the rotation movement of the main portion 41 is not inhibited.

When the rack 51 moves upward to a predetermined position, the ON/OFF means 43 comes into contact with the OFF switch 62, the supply of electric current to the electric motor 55 is interrupted, and the electric motor 55 is stopped.

As a result of such operation, the seat portion 2 assumes a state such as shown in Fig. 2(b). Therefore, the occurrence of the submarine phenomenon can be prevented. Because the safety ensuring device is actuated by a pre-crash sensor at a point of time prior to the vehicle collision, sufficient occupant protection can be ensured even when the vehicle thereafter collides.

Because the safety ensuring device also uses an acceleration sensor, the occurrence of submarine phenomenon can be also prevented by the above-described operation in the case of an abrupt deceleration caused by harsh braking. The occupant protection ability can be further increased by actuating a well-known seatbelt retractor 71 (for example, JP-A No. 2004-34887) in combination with the safety ensuring device, and restraining the occupant by a seatbelt 70.

Where the vehicle can run normally after the state shown in Fig. 2(b) has been assumed, the electric motor 55 rotates in reverse, assumes the state shown in Fig. 2(a) and can be prepared for the next collision or deceleration.

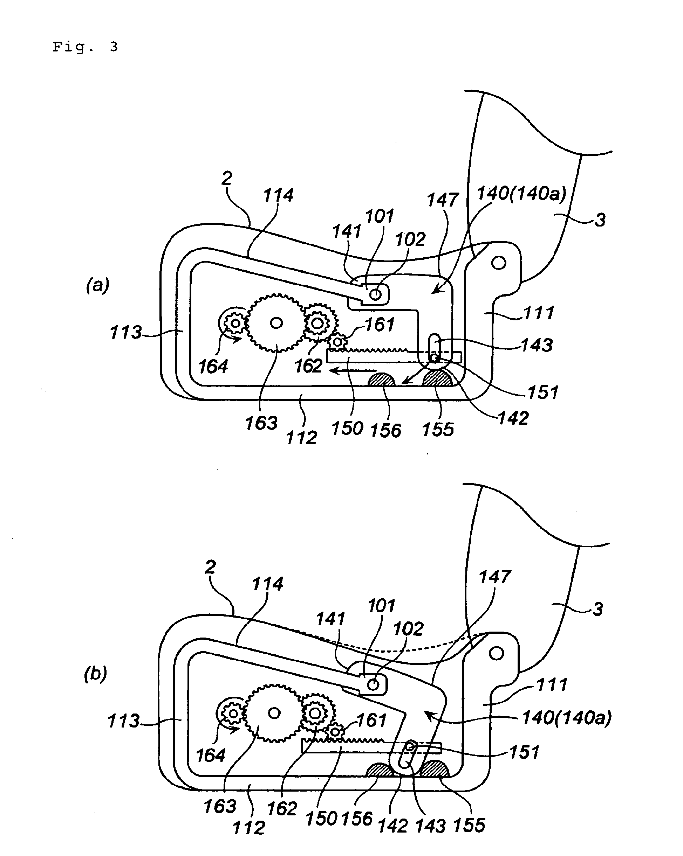

### (2) Safety ensuring device shown in Fig. 3.

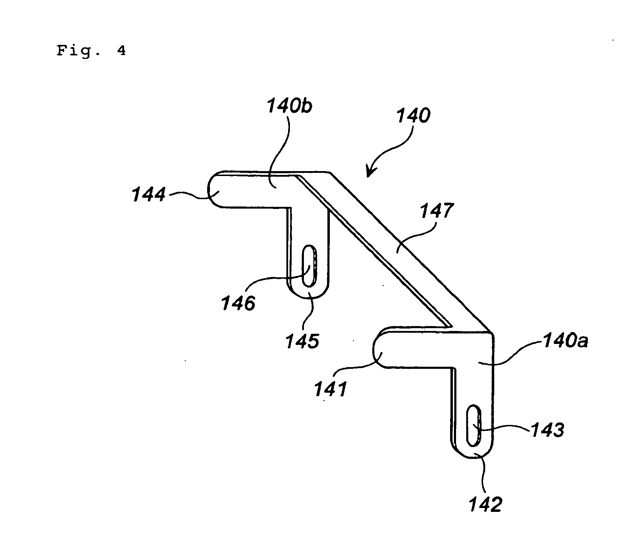

The safety ensuring device of an embodiment other than that illustrated by Fig. 1 will be explained with reference to Fig. 3, Fig. 4. Fig. 3(a) is a vertical sectional view (prior to actuation) of a seat provided with a safety ensuring device. Fig. 3(b) illustrates the state after the device shown in Fig. 3(a) has been actuated. In Fig. 3, only one side is shown, but the device has the same structure on the opposite side in the transverse direction. Fig. 4 is a perspective view of a movable portion 140 shown in Fig. 3.

Three frames (similarly to the device shown in Fig. 1, one frame is formed of four frame members) are disposed inside a seat portion 2, but by contrast with the frame structure shown in Fig. 1, a frame equivalent to the frame 30 shown in Fig. 1 is disposed in front of the seat portion 2.

Fig. 3 shows a frame member 111 equivalent to the frame member 11 shown in Fig. 1, a frame member 112 equivalent to the frame member 12, a frame member 113 equivalent to the frame member 13, and a frame member 114 equivalent to the frame member 14.

As shown in Fig. 4, the movable portion 140 has a first inclination forming plate 140a and a second inclination forming plate 140b which are disposed at both end sides in the transverse direction of the seat portion 2 and formed from a metal plate member with a middle portion thereof bent substantially at a right angle, and a seat support portion 147 that spans a region between the first inclination forming plate 140a and second inclination forming plate 140b.

As shown in Fig. 3, the movable portion 140 is rotatably connected by a pin 102 to an attachment portion 101 of the frame member 114 on the side of one end portion 141 of the first inclination forming plate 140a. The second inclination forming plate 140b is attached to the frame member in a similar manner on the side of one end portion 144.

A control hole 143 for controlling the inclination state of the first inclination forming plate 140a is formed in another end portion 142 of the first inclination forming plate 140a, and a control hole 146 for controlling the inclination state of the second inclination forming plate 140b is formed in another end portion 145 of the second inclination forming plate 140b.

A peripheral surface of the other end portion 142 of the movable portion 140 is abutted against a peripheral surface of a first stopper member 155 formed from a semicircular plate material provided on the frame member 112. A second stopper member 156 formed from a semicircular plate material is provided at a predetermined distance from the first stopper member 155 on the frame member 112.

The thickness of the other end portion 142 of the movable portion 140 and the thickness of the first stopper member 155 and second stopper member 156 are almost equal to each other, or the thickness of the first stopper member 155 and second stopper member 156 is set to be larger. Further, a groove sufficient in size for the other end portion 142 to enter therein is formed in a peripheral surface of the first stopper member 155 that is in contact with the other end portion 142, and the other end portion 142 may be movably inserted in the groove.

The distance between he first stopper member 155 and second stopper member 156 and the height thereof above the frame member 112 are set so that the other end portion 142 can be inserted between the first stopper member 155 and second stopper member 156, as shown in Fig. 3(b).

A drive portion has a rack 150, a pinion 161 disposed engageably with the rack 150, and a gear 162, a gear 163, and a gear 164 that are successively (engaged with the pinion 161, and the gear 164 is connected to an electric motor (not shown in the drawing). The electric motor is connected to a power source (vehicle battery) and a control unit (not shown in the drawing).

The rack 150 is provided with a fixing pin 151 protruding on the surface of one end side thereof, and the fixing pin 151 is inserted into the control hole 143 of the first inclination forming plate 140a. Because the top surface of the fixing pin 151 protrudes from the control hole 143, the fixing pin 151 does not fall out from the control hole 143. The diameter of the fixing pin 151 is slightly less than the width of the control hole 143.

The movable part may use separate electric motors on the side shown in Fig. 3 and the opposite side in the transverse direction of the seat portion 2, and other gears, cams, etc., may be assembled in addition to those shown in the drawings.

The operation of the safety ensuring device in accordance with the present invention that is installed on a vehicle will be explained below with reference to Fig. 3. The vehicle has a pre-crash sensor (approach sensor) and an acceleration sensor and also has a control unit.

When the vehicle runs and comes too close to an obstacle such as another vehicle, a signal from the pre-crash sensor that has detected such an event is transmitted to the control unit. In the control unit, the signal is processed and the safety ensuring device in accordance with the present invention is actuated at a stage prior to collision with the obstacle when the necessity of such an actuation is established.

As shown in Fig. 3(a), prior to actuation, the peripheral surface of the other end portion 142 of the first inclination forming plate 140a is in a state of contact with the peripheral surface of the first stopper member 155. Likewise, the peripheral surface of the other end portion 145 of the second inclination forming plate 140b is in a state of contact with the peripheral surface of the stopper member, and the occupant's buttocks are supported by the seat support portion 147 that spans a region between the first inclination forming plate 140a and second inclination forming plate 140b.

As shown in Fig. 3(a), when an actuation current is received from the control unit, the electric motor is actuated and rotates, thereby rotating the gears 164 to 162 and pinion 161 successively. The rack 150, which receives the rotation of the pinion 161, moves in the direction shown by the arrow in the drawing. In this case, the other end portion 142 of the first inclination forming plate 140a is pulled by a portion of the control hole 143 and moved in the direction shown by the arrow in the drawing by the fixing pin 151 of the moving rack 150. At this time, the other end portion 145 of the second inclination forming plate 140b is pulled and moved in the same manner.

Then, as shown in Fig. 3(b), the other end portion 142 of the first inclination forming plate 140a enters between the first stopper 155 and second stopper 156, thereby stopping the movement of the rack 150. In this case, the other end portion 145 of the second inclination forming plate 140b enters between the two stoppers in a similar manner. At this time, the supply of electric current to the electric motor may be interrupted to stop the electric motor.

Because the first inclination forming plate 140a and second inclination forming plate 140b are inclined, the seat support portion 147 is also inclined, the seat 2 where the occupant's buttocks are located is concaved, assuming the state shown in Fig. 3(b), and the occurrence of submarine phenomenon is prevented. Because the safety ensuring device in accordance with the present invention is actuated at a point of time before the vehicle collides, the occupant can be sufficiently protected even when the vehicle thereafter collides.

The safety ensuring device in accordance with the present invention operates in the same manner as described above even during an abrupt deceleration caused by harsh braking because an acceleration sensor is also used, thereby making it possible to prevent the occurrence of submarine phenomenon.

When the vehicle can run normally after the state shown in Fig. 3(b) has been assumed, the electric motor is rotated in reverse and the configuration can be returned to the state shown in Fig. 3(a) and prepared for the next collision or deceleration.

## Claims

1. A safety ensuring device for ensuring safety of an occupant when an impact caused by a collision or a rapid deceleration is applied to the occupant wearing a seatbelt when a vehicle runs and an occupant-restraining performance degrades, comprising:
a movable portion (140) that is disposed in a seat portion (2) of a vehicle seat (1) and
moves the seat portion (2) up and down, the moveable portion (140) is rotatably attached to a frame member (114); and
a drive portion that is accommodated inside the vehicle seat (1) and moves the movable portion (140) up and down, wherein the drive portion moves the movable portion (140) up and down by an electric drive device upon receiving electric signals from a sensor installed on the vehicle and a control unit connected to the sensor, and at least a pre-crash sensor is provided as the sensor, **characterized in that** the movable portion (140) is provided at the rear end portion of the seat portion (2) of the vehicle seat (1) and concaves the rear end portion side downward when an impact caused by a collision or an abrupt deceleration is applied to the occupant wearing the seatbelt.

2. A safety ensuring device according to claim 1, **characterized by**, as the sensor, an acceleration sensor or a deceleration sensor for sensing an abrupt deceleration when harsh braking is performed during running of the vehicle, in addition to the pre-crash sensor for sensing that the vehicle rapidly approaches a collision object during running of the vehicle.

## Patentansprüche

1. Sicherheits-Gewährleistungsvorrichtung zum Gewährleisten von Sicherheit eines Insassen, wenn ein Stoß, der durch eine Kollision oder eine schnelle Verzögerung verursacht wird, auf den Insassen wirkt, der einen Sicherheitsgurt trägt, wenn ein Fahrzeug fährt und eine Insassen-Rückhalteleistung abnimmt, wobei die Vorrichtung umfasst:
einen beweglichen Abschnitt (140), der in einem Sitzabschnitt (2) eines Fahrzeugsitzes (1) angeordnet ist und den Sitzabschnitt (2) nach oben und nach unten bewegt, wobei der bewegliche Abschnitt (140) drehbar an einem Rahmenelement (114) angebracht ist; und
einen Antriebsabschnitt, der im Inneren des Fahrzeugsitzes (1) aufgenommen ist und den beweglichen Abschnitt (140) nach oben und nach unten bewegt, wobei der Antriebsabschnitt beim Empfangen elektrischer Signale von einem an dem Fahrzeug installierten Sensor und einer mit dem Sensor verbundenen Steuereinheit den beweglichen Abschnitt (140) mittels einer elektrischen Antriebsvorrichtung nach oben und nach unten bewegt, und wenigstens ein Pre-Crash-Sensor als der Sensor vorhanden ist, **dadurch gekennzeichnet, dass** der bewegliche Abschnitt (140) an dem hinteren Endabschnitt des Sitzabschnitts (2) des Fahrzeugsitzes (1) vorhanden ist und die Seite des hinteren Endabschnitts nach unten konkav verformt, wenn ein durch eine Kollision oder ein abruptes Abbremsen verursachter Stoß auf den Insassen wirkt, der den Sicherheitsgurt trägt.

2. Vorrichtung zum Gewährleisten von Sicherheit nach Anspruch 1, **gekennzeichnet durch** einen Beschleunigungssensor oder einen Verzögerungssensor, mit dem eine abrupte Verzögerung erfasst wird, wenn scharfes Bremsen bei Fahrt des Fahrzeugs durchgeführt wird, als den Sensor zusätzlich zu dem Pre-Crash-Sensor, mit dem erfasst wird, dass sich das Fahrzeug bei Fahrt des Fahrzeug einem Kollisionsobjekt schnell nähert.

## Revendications

1. Dispositif de garantie de la sécurité pour garantir la sécurité d'un occupant quand un choc causé par une collision ou une rapide décélération est appliqué à l'occupant qui porte une ceinture de sécurité, quand un véhicule roule et qu'un effet de retenue d'occupant se dégrade, comprenant :
une partie mobile (140) qui est disposée dans une partie d'assise (2) d'un siège de véhicule (1) et qui déplace ladite partie d'assise (2) vers le haut et vers le bas, la partie mobile (140) étant fixée en rotation à un élément de châssis (14) ;
et une partie d'entraînement qui est logée à l'intérieur du siège de véhicule (1) et qui déplace la partie mobile (140) vers le haut et vers le bas, étant précisé que la partie d'entraînement déplace la partie mobile (140) vers le haut et vers le bas grâce à un dispositif d'entraînement électrique lors de la réception de signaux électriques à partir d'un capteur installé sur le véhicule, et d'une unité de commande reliée au capteur, et qu'au moins un capteur pré-accident est prévu comme capteur, **caractérisé en ce que** la partie mobile (140) est prévue sur la partie d'extrémité arrière de la partie d'assise (2) du siège de véhicule (1) et creuse vers le bas le côté de la partie d'extrémité arrière quand un choc causé par une collision ou une décélération brutale est appliqué à l'occupant qui porte la ceinture de sécurité.

2. Dispositif de garantie de sécurité selon la revendication 1, caractérisé, comme capteur, par un capteur d'accélération ou un capteur de décélération pour capter une décélération brutale quand un freinage dur survient alors que le véhicule roule, en plus du capteur pré-accident pour capter le fait que le véhicule approche rapidement d'un objet de collision, en roulant.
